# EUROPEAN PATENT SPECIFICATION

(11) **EP 3 839 606 B1**
(45) Date of publication and mention of the grant of the patent: **23.10.2024**
(21) Application number: 19020714.2
(22) Date of filing: 19.12.2019
(51) Int. Cl.: G02B 27/00, B60S 1/54, G01N 21/15, B08B 17/02

(54) **SENSOR ASSEMBLY WITH A CLEANING DEVICE**
SENSORANORDNUNG MIT EINER REINIGUNGSVORRICHTUNG
ENSEMBLE CAPTEUR AVEC UN DISPOSITIF DE NETTOYAGE

(43) Date of publication of application: 23.06.2021
(73) Proprietor: BOBST MEX SA, 1031 Mex (CH)
(72) Inventor: Lair, Tim, 1030 Bussigny (CH); QIU, Jesse, Shanghai, 200061 (CN)
(74) Representative: Hasler, David

(56) References cited:
- EP-A1- 3 207 791
- EP-A2- 0 327 936
- WO-A1-2012/138455
- WO-A1-2015/122973
- WO-A1-2019/216764
- CN-U- 207 238 651
- DE-A1- 102016 107 380
- FR-A1- 3 056 526

## Description

This disclosure relates to a cleaning device for an optical sensor, comprising a gas flow channel oriented towards a target surface such that a gas flowing through the gas flow channel is discharged onto the target surface.

The invention relates to a sensor assembly comprising an optical sensor having a sensing surface and a cleaning device as described above.

Such sensor assemblies and cleaning devices are known in the art.

It is a widely known issue that sensors, especially optical sensors, need to be kept clean in order to guarantee their reliable functionality, i.e. assure correct values being captured by the sensor. This is the case for nearly all kind of sensors being used in industrial environments and especially applies to optical sensors being used in paper or cardboard processing machines. In such machines optical sensors are used for detecting the presence and/or a correct position of a sheet of paper or cardboard to be processed.

In this field of application, the problem of cleaning sensors has already been tackled by cleaning devices being designed for discharging gas, especially air, on the sensor and thus being able to blow aside dirt and dust particles. In terms of cleaning effectiveness, these cleaning devices still are inferior to manual cleaning. For this reason, even if such cleaning devices are used, manual cleaning of the sensors is still necessary.

It is an object of the present invention to further improve such cleaning devices and sensor assemblies equipped therewith. More precisely, a cleaning device shall be provided which is both efficient and effective in operation. Consequently, manual cleaning of sensors shall be avoided.

The invention is defined by the sensor assembly of claim 1. Preferred embodiments are defined in the dependent claims.

FR 3 056 526 discloses a system to clean the headlights of a car with a spraying nozzle. The system is built for spraying liquid but is not suitable for using a gas.

WO 2015/122973 discloses an optical system with an integrated air blower to remove dust from the front lens. The blower is adjacent to the lens.

WO 2019/216764 uses a flushing channel with air to clean a double window on an optical path. The air outlet is implemented as a hole in a wall of the device.

EP 3 207 791 discloses a handheld leaf blower with lateral openings. The lateral openings allow for an increase of the air flow of the blower, thus improving the blower efficiency. The device is handheld and includes no teachings about the optimal blowing spatial configuration.

CN207238651 U provides a computer dust removal mechanism based with an S-shaped air pipe. The dust removal does not include any blowing efficiency enhancement mechanisms like lateral air intakes or variable pipe size.

The problem is solved by a cleaning device as described above, wherein an outlet of the gas flow channel is facing the target surface and a central axis of the outlet intersects the target surface substantially at a center thereof and is oriented substantially at an angle of 30° to 70° to the target surface. It has been found that an angle of 30° to 70° leads to effective and efficient cleaning of sensors to which the cleaning device is applied. Also, the fact that the central axis intersects the center of the target surface leads to good cleaning results. In doing so, the pressure of the gas being discharged on the target surface is able to separate dirt particles from the target surface even if the particles adhere thereto to a certain degree. Additionally, these dirt particles may be led away from the target surface by the discharged gas. As a consequence thereof, manual cleaning is rendered unnecessary.

According to a preferred embodiment, the central axis of the outlet is oriented substantially at an angle of 40° to 50° to the target surface, more preferably at an angle of 45° +/- 1°. With such a cleaning device the same effects as described above may be achieved to an even higher degree.

The outlet of the gas flow channel may be formed as a nozzle. In this context, a nozzle is a portion of a gas flow channel with a cross-section decreasing along a central axis thereof. As a result thereof, a gas flow inside the gas flow channel is accelerated. Therefore, the gas is discharged from the gas flow channel at relatively high speed. This leads to efficient and effective cleaning of a sensor associated with the cleaning device.

According to an embodiment, the gas flow channel comprises an inlet, wherein a central axis of the gas flow channel is substantially S-shaped between the inlet and the outlet, in particular wherein a center plane of the S-shape comprising the central axis of the gas flow channel is oriented substantially orthogonally with respect to the target surface. In other words, the gas flow channel has the shape of a swan neck. Consequently, the outlet may be positioned as described above and at the same time the inlet may be arranged such that it is easily accessible in order to connect it to a supply pipe or supply tube providing gas to the gas flow channel. Moreover an S-shaped arrangement of the gas flow channel only requires a very limited amount of space. Therefore a cleaning device with an S-shaped gas flow channel is compact.

According to the invention, a cross-section of the gas flow channel decreases in a gas flow direction. This means that the cross-section of the gas flow channel decreases in a direction from the inlet to the outlet. In a preferred alternative the gradient of the decreasing cross-section is bigger in the nozzle than in the rest of the gas flow channel. Thereby, sufficient speed of the gas flow is assured leading to good cleaning results.

According to the invention, at least one air suction void is provided adjacent to the outlet for providing air to be dragged onto the target surface by the gas flow discharged from the outlet. In this context, a void is to be understood as an aperture in the cleaning device or a space adjacent to the cleaning device which is left free from any components thereof or any components of other parts. The gas being discharged onto the target surface may thus drag additional air toward the target surface. The gas being discharged thus works analogously to a waterjet pump. According to a preferred solution, the at least one air suction void is provided on the left and/or on the right and/or on top of the central axis of the outlet, when regarded in the direction of discharge with the target surface being at the bottom. With the additional air being dragged by the discharged gas cleaning efficiency and effectivity is enhanced since most air supplied by the outlet will reach the target. If no void was provided, part of the air flow discharged from the outlet would undergo a turbulence swirl, and thus be ineffective for cleaning the target surface.

Advantageously, the gas flow channel comprises an inlet portion comprising the inlet, an outlet portion comprising the outlet and a middle portion being interposed between the inlet portion and the outlet portion, wherein a support wall is provided supporting the outlet portion on the middle portion and/or on a base component of the cleaning device. The support wall increases the mechanical stability of the cleaning device making it especially suitable for industrial environments. Consequently, the cleaning device is robust and is able to provide a gas flow in a reliable manner. If the cleaning device is equipped with voids for providing air to be dragged onto the target, the supporting wall may separate two voids being provided on opposing sides of the gas flow channel. Thereby, the air to be dragged may be provided by different locations and the wall may avoid some turbulence swirl under certain conditions. Consequently, cleaning efficiency is enhanced. Additionally, by providing the supporting wall, the number of undercuts provided on the cleaning device is reduced. As a result thereof, it is easier to manufacture the cleaning device.

The support wall may extend substantially perpendicular to the target surface. This allows for a reliable support of the gas flow channel and simple manufacturing at the same time.

In an alternative the cleaning device is a single piece and/or produced by additive manufacturing. As a single piece, the cleaning device does not need to be assembled. When being produced by additive manufacturing, all geometrical features of the cleaning device, especially the geometry of the gas flow channel, may be freely chosen. Restrictions imposed on the geometry by the manufacturability of the cleaning device are minimal. Preferably, the cleaning device is manufactured by a 3D printing technology. If a support wall is provided, manufacturing of the cleaning device by an additive manufacturing technology is further simplified since the support wall reduces overhanging geometries.

The problem is also solved by a sensor assembly as described above, wherein the sensing surface and the target surface substantially coincide such that the central axis of the outlet of the gas flow channel intersects the sensing surface substantially at a center thereof and is oriented substantially at an angle of 30° to 70° to the sensing surface. In doing so, the sensing surface of the optical sensor is efficiently and effectively cleaned thereby ensuring highly reliable values being captured by the sensor. Manual cleaning is not necessary.

According to a preferred embodiment, the central axis of the outlet is oriented substantially at an angle of 40° to 50° to the sensing surface, more preferably at an angle of 45° +/- 1°. With such a cleaning device the same effects as described above may be achieved to an even higher degree.

The optical sensor may comprise an optical fiber, wherein the sensing surface is an end surface of the optical fiber. Such optical fibers are used in a wide variety of applications. An example thereof is paper or cardboard processing machines such as printing machines. In these machines optical fibers are used to detect the arrival of a sheet to be processes or to be printed upon. Usually, the end surface of the optical fibers is oriented vertically such that it is exposed to dirt particles and dust. In the sensor assembly, this problem is mitigated by the cleaning device.

According to an embodiment the optical sensor and the cleaning device are attached to a shared support part. Consequently, the sensor assembly is easy to assembly to a machine where it is applied. The optical sensor and/or the cleaning device may be simply bolted or screwed to the shared support part.

The invention will now be described with reference to the enclosed drawings. In the drawings,
- Figure 1 is a perspective view of a sensor assembly according to the invention comprising a cleaning device according to the invention,
- Figure 2 is a perspective view of the cleaning device of Figure 1, and
- Figure 3 is a cross-sectional view of the cleaning device of Figure 2, wherein the section plane coincides with the center plane of the gas flow channel.

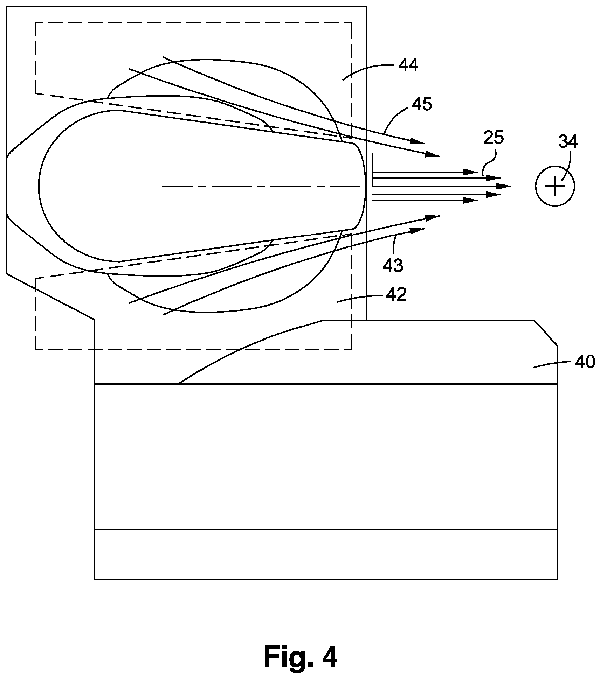

- Figure 4 is a top view of the cleaning device of Figure 2 showing the air flow dragged through the voids.
- Figure 5 is a top view of a cleaning device having a straight wall instead of a shape of a swan neck with voids on the side.

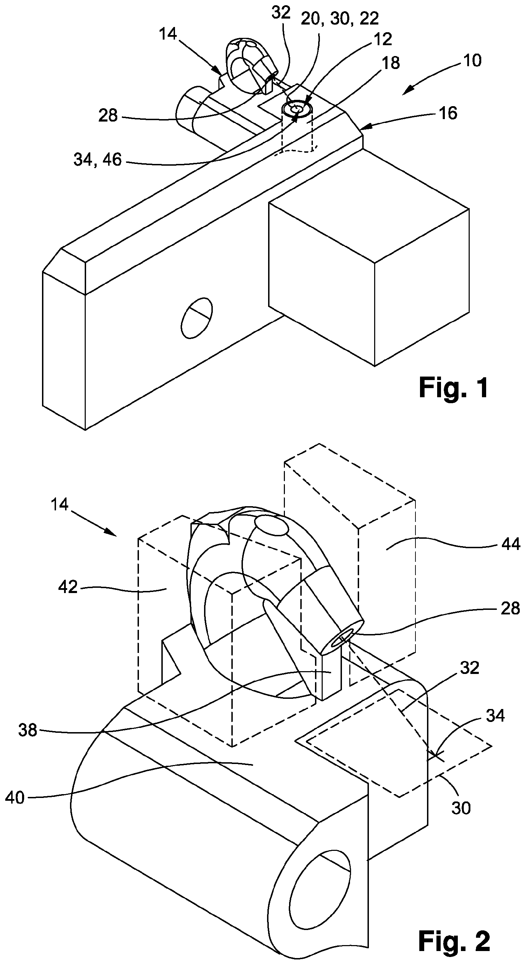

Figure 1 shows a sensor assembly 10 which comprises an optical sensor 12 and a cleaning device 14 being associated to the optical sensor 12. Such a sensor assembly may be used in a paper processing machine for detecting the presence of a sheet of paper, e.g. in a printing machine.

Both the optical sensor 12 and the cleaning device 14 are attached to a shared support part 16.

In the example shown the optical sensor 12 comprises an optical fiber 18 having an end surface 20. This end surface 20 constitutes a sensing surface 22 of the optical sensor 12.

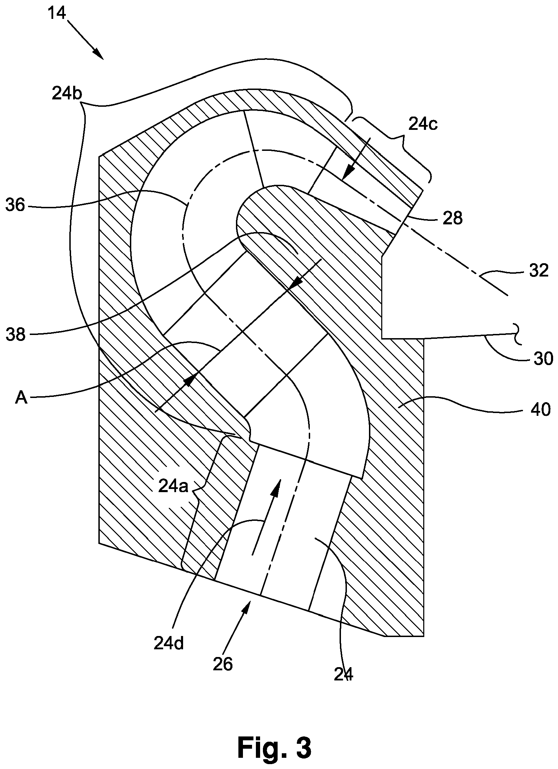

In Figures 2 and 3, the cleaning device 14 is shown in more detail. It comprises a gas flow channel 24 which has an inlet portion 24a, a middle portion 24b and an outlet portion 24c (cf. Figure 3).

The inlet portion 24a comprises an inlet 26 to which a gas flow may be provided.

The outlet portion 24c comprises an outlet 28 for discharging the gas flow onto a target surface 30 of the cleaning device 14.

To this end the outlet 28 is facing the target surface 30 and a central axis 32 of the outlet 28 intersects the target surface 30 substantially at a center 34 thereof.

Furthermore, the central axis 32 is oriented at an angle of substantially 45° to the target surface 30.

The middle portion 24b is arranged between the inlet portion 24a and the outlet portion 24c.

In the middle portion 24b and the outlet portion 24c a cross-section A of the gas flow channel 24 decreases in a gas flow direction 24d, i.e. the cross-section A of the gas flow channel 24 decreases in a direction from the inlet 26 to the outlet 28.

Moreover, the outlet 28 is specifically designed as a nozzle. This means that also within the outlet a cross-section of the gas flow channel 24 is decreasing. In the example shown a gradient of the decreasing cross-section is bigger in the nozzle than in the rest of the gas flow channel 24.

Additionally, a central axis 36 of the gas flow channel 24 is substantially S-shaped. In other words, the gas flow channel 24 has an S-shape. This applies to the gas flow channel 24 in its entirety, thus between the inlet 26 and the outlet 28.

A center plane of the S-shape corresponds to the section plane in Figure 3 and is substantially orthogonal with respect to the target surface 30.

Furthermore, a support wall 38 is provided supporting the outlet portion 24c on the middle portion 24b and on a base component 40 of the cleaning device 14.

The support wall 38 extends substantially perpendicular to the target surface 30. As can be seen from Figures 2 and 3 the support wall 38 at least partially closes the S-shape.

The cleaning device 14 is also equipped with two voids 42, 44 which are provided adjacent to the outlet 28 for providing air to be dragged onto the target surface 30 by the gas flow discharged from the outlet 28.

According to Figure 2, the voids 42, 44 are provided on the left and on the right of the central axis 32 of the outlet 28 respectively, when regarded in the direction of discharge with the target surface 30 being at the bottom.

The cleaning device 14 is designed as a single piece which is produced by additive manufacturing, e.g. 3D printing.

Within the sensor assembly 10 the cleaning device 14 is arranged on the support part 16 such that the sensing surface 22 of the optical sensor 12 and the target surface 30 substantially coincide.

Consequently, the central axis 32 of the outlet 28 of the gas flow channel 24 also intersects the sensing surface 22 substantially at a center 46 thereof and is oriented substantially at an angle of 45° to the sensing surface 22.

During operation of the sensor assembly 10 also the cleaning device 14 may be operated.

In this situation a gas flow is provided at the inlet 26 and therefore the gas flows through the gas flow channel 24 and is discharged onto the target surface 30.

Due to the decreasing cross-section A and the nozzle the gas is discharged at relatively high speed, i.e. at a speed higher than in the inlet portion 24a.

In combination with the angle of substantially 45° between the central axis 32 and the sensing surface 22 and the fact that the discharged gas is directed to the center 46 of the sensing surface 22, this arrangement is able to blow aside dust and dirt particles being present on the sensing surface 22. This also applies to dust or dirt particles adhering to the sensing surface 22.

This leads to good cleaning results, i.e. effective cleaning.

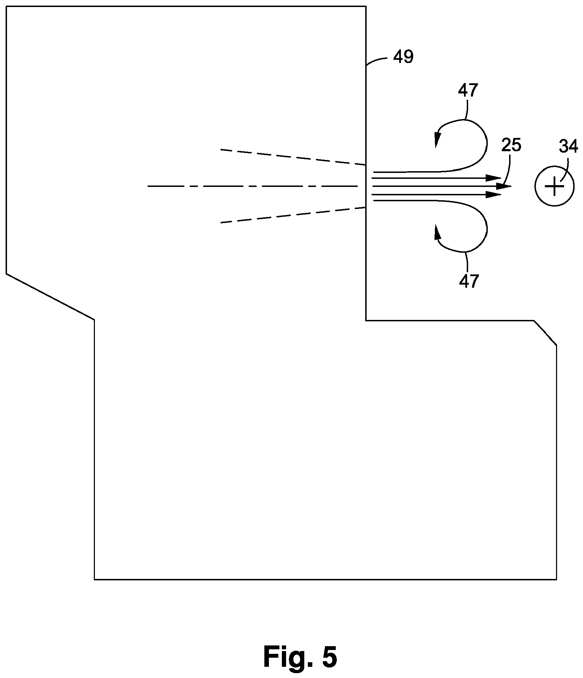

Thanks to the voids 42, 44 the gas 25 being provided by the gas flow channel 24 may drag an additional amount of air 43,45. The air drag happens in any case, but in the absence of voids, the gas must stem from the sides, causing the some turbulence swirl 47 on the sides of the gas 25 stream. Put in other words, with the voids 42,44 most - if not all - the air 25 provided via the gas flow channel 24 is used for cleaning the sensing surface 22. In the absence of voids 42,44, thus in a situation where air would not be allowed to flow next to the gas channel 24b,24c, part of the gas provided by the gas flow channel would be lost in turbulences 47, and thus not reach the sensor surface 22, as depicted on Figure 5. In other words, the gas flow reaching the sensor surface 22 would be weaker.

Consequently, the cleaning results are achieved in an efficient manner.

## Claims

1. Sensor assembly (10) comprising an optical sensor (12) having a sensing surface (22) and a cleaning device (14)for the optical sensor (12),
the cleaning device (14) comprising a gas flow channel (24) oriented towards a target surface (30) such that a gas (25) flowing through the gas flow channel (24) is discharged onto the target surface (30),
wherein an outlet (28) of the gas flow channel (24) is facing the target surface (30) and a central axis (32) of the outlet (28) intersects the target surface (30) substantially at a center (34) thereof and is oriented substantially at an angle of 30° to 70° to the target surface (30) and
wherein a cross-section (A) of the gas flow channel (24) decreases in a gas flow direction (24d)
**characterized in that**
two air suction voids (42,44) are provided on opposing sides of the gas flow channel adjacent to the outlet (28) for providing air to be dragged toward the target surface (30) by the gas flow discharged from the outlet (28), and
wherein the sensing surface (22) and the target surface (30) substantially coincide such that the central axis (32) of the outlet (28) of the gas flow channel (24) intersects the sensing surface (22) substantially at a center (46) thereof and is oriented substantially at an angle of 30° to 70° to the sensing surface (22).

2. Sensor assembly (10) according to any of the preceding claims, **characterized in that** the outlet (28) of the gas flow channel (24) is formed as a nozzle.

3. Sensor assembly (10) according to any of the preceding claims, **characterized in that** the gas flow channel (24) comprises an inlet (26), wherein a central axis (36) of the gas flow channel (24) is substantially S-shaped between the inlet (26) and the outlet (28), in particular wherein a center plane of the S-shape comprising the central axis (36) of the gas flow channel (24) is oriented substantially orthogonally with respect to the target surface (30).

4. Sensor assembly (10) according to any of the preceding claims, wherein the gas flow channel (24) comprises an inlet portion (24a) comprising the inlet (26), an outlet portion (24c) comprising the outlet (28) and a middle portion (24b) being interposed between the inlet portion (24a) and the outlet portion (24c), wherein a support wall (38) is provided supporting the outlet portion (24c) on the middle portion (24b) and/or on a base component (40) of the cleaning device (14).

5. Sensor assembly (10) according to claim 4, wherein the support wall (38) extends substantially perpendicular to the target surface (30).

6. Sensor assembly (10) according to any of the preceding claims, wherein it is a single piece and/or produced by additive manufacturing.

7. Sensor assembly (10) according to any of the preceding claims, wherein the optical sensor (12) comprises an optical fiber (18), wherein the sensing surface (22) is an end surface (20) of the optical fiber (18).

8. Sensor assembly (10) according to any of the preceding claims, wherein the optical sensor (12) and the cleaning device (14) are attached to a shared support part (16).

## Patentansprüche

1. Sensoranordnung (10), die einen optischen Sensor (12) umfasst, der eine Abtastoberfläche (22) aufweist, und eine Reinigungsvorrichtung (14) für den optischen Sensor(12),
wobei die Reinigungsvorrichtung (14) einen Gasströmungskanal (24) umfasst, der derart auf eine Zieloberfläche (30) ausgerichtet ist, dass ein durch den Gasströmungskanal (24) strömendes Gas (25) auf die Zieloberfläche (30) abgegeben wird,
wobei ein Auslass (28) des Gasströmungskanals (24) der Zieloberfläche (30) zugewandt ist, und eine Mittelachse (32) des Auslasses (28) die Zieloberfläche (30) im Wesentlichen in einem Mittelpunkt (34) davon schneidet und im Wesentlichen in einem Winkel von 30° bis 70° zu der Zieloberfläche (30) ausgerichtet ist, und
wobei ein Querschnitt (A) des Gasströmungskanals (24) in einer Gasströmungsrichtung (24d) abnimmt,
**dadurch gekennzeichnet, dass**
zwei Luftsaughohlräume (42, 44) an entgegengesetzten Seiten des Gasströmungskanals neben dem Auslass (28) bereitgestellt sind, um Luft bereitzustellen, die durch den aus dem Auslass (28) abgegebenen Gasstrom in Richtung der Zieloberfläche (30) gesaugt wird, und
wobei die Abtastoberfläche (22) und die Zieloberfläche (30) im Wesentlichen derart zusammenfallen, dass die Mittelachse (32) des Auslasses (28) des Gasströmungskanals (24) die Abtastoberfläche (22) im Wesentlichen in einem Mittelpunkt (46) davon schneidet und im Wesentlichen in einem Winkel von 30° bis 70° zu der Abtastoberfläche (22) ausgerichtet ist.

2. Sensoranordnung (10) nach einem der vorstehenden Ansprüche, **dadurch gekennzeichnet, dass** der Auslass (28) des Gasströmungskanals (24) als eine Düse ausgebildet ist.

3. Sensoranordnung (10) nach einem der vorstehenden Ansprüche, **dadurch gekennzeichnet, dass** der Gasströmungskanal (24) einen Einlass (26) umfasst, wobei eine Mittelachse (36) des Gasströmungskanals (24) zwischen dem Einlass (26) und dem Auslass (28) im Wesentlichen S-förmig ist, wobei insbesondere eine Mittelebene der S-Form, die die Mittelachse (36) des Gasströmungskanals (24) umfasst, im Wesentlichen orthogonal in Bezug auf die Zieloberfläche (30) ausgerichtet ist.

4. Sensoranordnung (10) nach einem der vorstehenden Ansprüche, wobei der Gasströmungskanal (24) einen Einlassabschnitt (24a) umfasst, der den Einlass (26) umfasst, einen Auslassabschnitt (24c), der den Auslass (28) und einen Mittelabschnitt (24b) umfasst, der zwischen dem Einlassabschnitt (24a) und dem Auslassabschnitt (24c) eingefügt ist, wobei eine Trägerwand (38) bereitgestellt ist, die den Auslassabschnitt (24c) auf dem Mittelabschnitt (24b) und/oder an einem Basisbauteil (40) der Reinigungsvorrichtung (14) trägt.

5. Sensoranordnung (10) nach Anspruch 4, wobei sich die Trägerwand (38) im Wesentlichen senkrecht zu der Zieloberfläche (30) erstreckt.

6. Sensoranordnung (10) nach einem der vorstehenden Ansprüche, wobei sie einstückig ist und/oder durch additive Herstellung hergestellt ist.

7. Sensoranordnung (10) nach einem der vorstehenden Ansprüche, wobei der optische Sensor (12) eine optische Faser (18) umfasst, wobei die Abtastoberfläche (22) eine Endoberfläche (20) der optischen Faser (18) ist.

8. Sensoranordnung (10) nach einem der vorstehenden Ansprüche, wobei der optische Sensor (12) und die Reinigungsvorrichtung (14) an einem gemeinsamen Trägerteil (16) angebracht sind.

## Revendications

1. Ensemble capteur (10) comprenant un capteur optique (12) présentant une surface de détection (22) et un dispositif de nettoyage (14) pour le capteur optique (12),
le dispositif de nettoyage (14) comprenant un canal d'écoulement de gaz (24) orienté vers une surface cible (30) de telle sorte qu'un gaz (25) s'écoulant à travers le canal d'écoulement de gaz (24) soit évacué sur la surface cible (30),
dans lequel une sortie (28) du canal d'écoulement de gaz (24) fait face à la surface cible (30) et un axe central (32) de la sortie (28) coupe la surface cible (30) sensiblement au niveau d'un centre (34) de celle-ci et est orienté sensiblement à un angle de 30° à 70° par rapport à la surface cible (30) et
dans lequel une section transversale (A) du canal d'écoulement de gaz (24) diminue dans une direction d'écoulement de gaz (24d)
**caractérisé en ce que**
deux vides d'aspiration d'air (42, 44) sont ménagés sur des côtés opposés du canal d'écoulement de gaz adjacents à la sortie (28) pour fournir de l'air à entraîner vers la surface cible (30) par l'écoulement de gaz évacué à partir de la sortie (28), et
dans lequel la surface de détection (22) et la surface cible (30) coïncident sensiblement de telle sorte que l'axe central (32) de la sortie (28) du canal d'écoulement de gaz (24) coupe la surface de détection (22) sensiblement au niveau d'un centre (46) de celle-ci et soit orienté sensiblement à un angle de 30° à 70° par rapport à la surface de détection (22).

2. Ensemble capteur (10) selon l'une quelconque des revendications précédentes, **caractérisé en ce que** la sortie (28) du canal d'écoulement de gaz (24) est formée sous la forme d'une buse.

3. Ensemble capteur (10) selon l'une quelconque des revendications précédentes, **caractérisé en ce que** le canal d'écoulement de gaz (24) comprend une entrée (26), dans lequel un axe central (36) du canal d'écoulement de gaz (24) est sensiblement en forme de S entre l'entrée (26) et la sortie (28), en particulier dans lequel un plan central de la forme en S comprenant l'axe central (36) du canal d'écoulement de gaz (24) est orienté sensiblement orthogonalement par rapport à la surface cible (30).

4. Ensemble capteur (10) selon l'une quelconque des revendications précédentes, dans lequel le canal d'écoulement de gaz (24) comprend une partie d'entrée (24a) comprenant l'entrée (26), une partie de sortie (24c) comprenant la sortie (28) et une partie médiane (24b) étant intercalée entre la partie d'entrée (24a) et la partie de sortie (24c), dans lequel une paroi de support (38) est prévue pour supporter la partie de sortie (24c) sur la partie médiane (24b) et/ou sur un composant de base (40) du dispositif de nettoyage (14).

5. Ensemble capteur (10) selon la revendication 4, dans lequel la paroi de support (38) s'étend sensiblement perpendiculairement à la surface cible (30).

6. Ensemble capteur (10) selon l'une quelconque des revendications précédentes, dans lequel il est en une seule pièce et/ou produit par fabrication additive.

7. Ensemble capteur (10) selon l'une quelconque des revendications précédentes, dans lequel le capteur optique (12) comprend une fibre optique (18), dans lequel la surface de détection (22) est une surface d'extrémité (20) de la fibre optique (18).

8. Ensemble capteur (10) selon l'une quelconque des revendications précédentes, dans lequel le capteur optique (12) et le dispositif de nettoyage (14) sont fixés à une partie de support partagée (16).
